# EUROPÄISCHE PATENTSCHRIFT

(11) **EP 1 907 727 B1**
(45) Veröffentlichungstag und Bekanntmachung des Hinweises auf die Patenterteilung: **05.08.2009**
(21) Anmeldenummer: 06791528.0
(22) Anmeldetag: 29.06.2006
(51) Int. Cl.: F16H 7/08, F16H 7/18

(54) **UMSCHLINGUNGSTRIEB**
BELT DRIVE
MECANISME D'ENTRAINEMENT A COURROIE

(30) Priorität: 16.07.2005 DE 102005033322
(43) Veröffentlichungstag der Anmeldung: 09.04.2008
(73) Patentinhaber: Schaeffler KG, 91074 Herzogenaurach (DE)
(72) Erfinder: SCHUSEIL, Bolko, 91325 Adelsdorf (DE); BOGNER, Michael, 90542 Eckental (DE); KERN, Roman, 91301 Forchheim (DE)
(86) Internationale Anmeldenummer: PCT/EP2006/006295
(87) Internationale Veröffentlichungsnummer: WO 2007/009566

(56) Entgegenhaltungen:
- DE-A1- 10 247 419
- DE-A1- 19 536 643
- US-B1- 6 358 169

## Beschreibung

Die Erfindung bezieht sich auf einen Umschlingungstrieb, entsprechnend dem Oberbegriff des Anspruch 1 und wie er aus der US 6358169B bekannt ist.

### Hintergrund der Erfindung

Derartige Umschlingungstriebe werden beispielsweise für Steuer- und/oder Aggregatetriebe von Brennkraftmaschinen eingesetzt. Das Zugmittel, beispielsweise der Steuerriemen wird dabei durch ein an einer Kurbelwelle des Motors angebrachtes Antriebsrad angetrieben und treibt Abtriebsräder an, welche mit Steuer- bzw. Nockenwellen des Motors verbunden sind. Zur Eingrenzung von transversalen Schwingungen des Steuerriemens wird dieser an seiner in das Antriebsrad einlaufenden, gespannten Seite über eine Führung geführt und an seiner aus dem Antriebsrad herauslaufenden, lockeren Seite durch eine Spannvorrichtung mit einer den Riemen spannenden Kraft beaufschlagt.

Auch die EP 1 262 685 zeigt einen gattungsgemäßen Umschlingungstrieb, bei dem zur Eingrenzung von transversalen Schwingungen eines Steuerriemens dieser sowohl an seiner in ein Antriebsrad einlaufenden, gespannten Seite als auch an seiner aus dem Antriebsrad auslaufenden, lockeren Seite durch eine Spannvorrichtung mit einer Kraft beaufschlagt wird. Die Einstellung der Kräfte erfolgt dabei über einen rotatorisch verstellbaren Ringkörper, an dem Führungsschienen angelenkt sind, die auf den Steuerriemen wirken. Mit dem Grad der Verdrehung des Ringkörpers erhöht bzw. vermindert sich die auf den Steuerriemen wirkende Spannkraft. Die Verdrehung des Ringkörpers selbst wird durch eine Kombination von Öldruck und Federkraft erzeugt.

Die DE 196 16 081 C1 zeigt einen aus Riemenscheiben und einen endlosen Riemen bestehenden Riementrieb mit einer Vorrichtung zur Beruhigung von Riemenschwingungen, bei dem zum Abbau von Riemenschwingungen in einem entsprechend kritischen Bereich ein Leitblech in engem Abstand zum Riemen fest angeordnet ist.

Die Eingrenzung von transversalen Schwingungen bei Umschlingungstrieben ist hinsichtlich ihrer Funktionstüchtigkeit, Lebensdauer und Geräuschentwicklung von großer Bedeutung. Dies gilt unabhängig davon, wie viele Antriebs- und Abtriebsräder bei einem Umschlingungstrieb konkret zur Anwendung kommen. Bei dem Umschlingungsmittel kann es sich beispielsweise um eine Kette oder einen Zahnriemen eines Steuertriebs handeln, welcher Kurbel- und Nockenwellen miteinander synchronisiert, oder beispielsweise auch um einen Antriebsriemen, welcher eine Riemenscheibe einer Antriebswelle mit der Riemenscheibe einer Abtriebswelle für ein beliebiges Aggregat antriebswirksam verbindet.

Bei zu groß werdenden Transversalschwingungen können benachbarte Bauteile beschädigt werden, wenn aufgrund zu großer Transversalschwingungen ein Zahnriemen oder einer Kette kurzzeitig den formschlüssigen Kontakt mit einem Antriebs- oder auch Abtriebselement verliert. Durch übermäßige Transversalschwingungen können ferner ungebührlich hohe mechanische Beanspruchungen für das Umschlingungsmittel selbst auftreten, was zu einer verkürzten Lebensdauer des Umschlingungsmittels führt. Zudem verursachen übermäßige Transversalschwingungen eine vergleichsweise hohe Geräuschentwicklung.

Letztlich können Synchronisationsfehler zwischen wenigstens zwei Nockenwellen und/oder zwischen diesen und der Kurbelwelle einer Brennkraftmaschine auftreten, wenn das Umschlingungsmittel aufgrund von Verschleiß gelängt ist und eine Spannvorrichtung an einem Umschlingungsmitteltrumm dies durch einen vergrößerten Spannweg ausgleicht. Da diese einzige Spannvorrichtung üblicherweise von einem durch den Öldruck der Brennkraftmaschine beaufschlagten Aktuator betätigt wird, ist insbesondere beim Start der Brennkraftmaschine kein ausreichender Öldruck im Aktuator vorhanden, so dass bei bekannten Umschlingungstrieben ein Zahnspringen nachteilig kaum zu vermeiden ist.

Zu beachten ist zudem die steigende Komplexität von Aggregaten bei in der Regel nur begrenzten Platzverhältnissen im Bereich des Umschlingungstriebs sowie die aufgrund einer zunehmenden Aggregatevielfalt erforderliche Flexibilität des Umschlingungstriebs hinsichtlich seiner Anpassbarkeit an unterschiedlichste Betriebsbedingungen.

### Aufgabe der Erfindung

Der Erfindung liegt daher die Aufgabe zugrunde, einen Umschlingungstrieb zu schaffen, bei dem ein durch eine verschleißbedingte Längung des Umschlingungsmittels verursachtes Zahnspringen zwischen dem Umschlingungsmittel und dem Antriebselement bzw. Abtriebselementen sicher vermeidbar sowie zumindest die Amplitude von Transv,ersalschwingungen des Umschlingungsmittels reduzierbar ist.

### Zusammenfassung der Erfindung

Der Erfindung liegt die Erkenntnis zugrunde, dass durch gezielte Verbesserung des Umschlingungstrieb-Layouts bzw. Umschlingungstrieb-Aufbaus Transversalschwingungen des Umschlingungsmittels reduzierbar sowie ein Zahnspringen vermeidbar sind. Dabei kommt es vor allem darauf an, dass besondere Mittel vorhanden und so am Umschlingungstrieb angeordnet sind, dass bei einer Entspannung des Umschlingungsmittels bei nachlassender Kraftbeaufschlagung durch die aktuatorbetätigte Spannvorrichtung verhindert wird, dass sich das Umschlingungsmittel vor dem Antriebselement des Umschlingungstriebs staut und von diesem abhebt.

Die Erfindung geht daher aus von einem Umschlingungstrieb, mit den Merkmalen des Anspruchs 1.

Ein solcher Umschlingungstrieb kann ein Steuertrieb einer Brennkraftmaschine in Form eines Zahnriementriebs oder eines Kettentriebs sein, er kann aber auch als Zahnriementrieb oder Kettentrieb zum Antrieb von einem Antriebsmotor zugeordneten Nebenaggregaten sein.

Durch diesen Aufbau wird vorteilhaft erreicht, dass ein verschleißbedingt über sein ursprüngliches Montagemaß hinaus verlängertes Umschlingungsmittel nicht von dem Antriebselement des Umschlingungstriebes zahnspringend abheben oder sich vor diesem aufstauen kann, wenn die Anpresskraft einer zugeordneten druckmittelbetätigbaren Spannvorrichtung betriebsbedingt noch nicht oder nicht mehr vorliegt. Zudem ist mit einem gemäß der Erfindung konstruktiv aufgebauten Riemen- oder Kettentrieb die Wahrscheinlichkeit und der Umfang des Auftretens von Transversalschwingungen des Umschlingungsmittels reduzierbar.

Die dritte, radial innerhalb des Umschlingungstriebs angeordnete Vorrichtung ist dazu geeignet und vorgesehen, zusätzlich auf die von den anderen Vorrichtungen nicht erreichte Innenseite des Umschlingungsmittels lenkend zu wirken, und ist je nach Bedarf dort angeordnet, wo dies zur Erfüllung dieses Zwecks dem Fachmann am sachdienlichsten erscheint.

Bevorzugt ist vorgesehen, dass die wenigstens einmal im Umschlingungstrieb vorhandene dritte Vorrichtung im Bereich des Antriebselementes, also beispielsweise einer Kurbelwellenantriebsscheibe, angeordnet ist, wodurch in vorteilhafter Weise in diesem meistens kritischen Bereich eine zusätzliche Vermeidung bzw. Verhinderung von unerwünschten Schwingungen und Zahnspringen ermöglicht wird.

Wenn die wenigstens einmal im Umschlingungstrieb vorhandene dritte Vorrichtung in demjenigen Bereich des Antriebselementes angeordnet ist, in dem das Umschlingungsmittel in seiner Umlaufrichtung das Antriebselement erreicht oder in demjenigen Bereich des Antriebselementes angeordnet ist, in dem das Umschlingungsmittel in seiner Umlaufrichtung das Antriebselement verlässt, kann an diesen im unmittelbaren Bereich des Antriebselementes befindlichen Abschnitten des Umschlingungsmittels eine positive Beeinflussung dessen Schwingungsverhaltens sowie ein vorgegebener Ein- bzw. Auslaufwinkel und eine vorgegebene vorteilhafte Kontaktlänge des Umschlingungsmittels an dem Antriebselement erzielt werden.

Besonders zweckdienlich ist es in diesem Zusammenhang, wenn in Ausgestaltung der Erfindung die wenigstens einmal im Umschlingungstrieb vorhandene dritte. Vorrichtung dazu geeignet ist, sowohl in demjenigen Bereich des Antriebselementes zu wirken, in dem das Umschlingungsmittel in seiner Umlaufrichtung das Antriebselement erreicht, als auch in demjenigen Bereich des Antriebselementes, in dem das Umschlingungsmittel in seiner Umlaufrichtung das Antriebselement verlässt.

Die wenigstens einmal im Umschlingungstrieb vorhandene dritte Vorrichtung muss dabei nicht unbedingt als Führungsmittel für das Umschlingungsmittel ausgebildet sein. Sie muss sich also nicht in ständigem Kontakt mit dem Umschlingungsmittel befinden, sondern es ist durchaus von Vorteil, wenn diese in einem definierten Abstand von der Innenseite des Umschlingungsmittels angeordnet ist. Hierdurch kommt diese nur bei tatsächlich auftretenden unerwünschten Transversalschwingungen und/oder Stauungen des Umschlingungsmittels im Leertrumm, welches insgesamt zu einer Reibungsreduzierung an dieser dritten Vorrichtung führt.

Zusätzlich kann vorteilhaft vorgesehen sein, dass die wenigstens einmal im Umschlingungstrieb vorhandene dritte Vorrichtung mit der wenigstens-einmal im Umschlingungstrieb vorhandenen ersten Spannvorrichtung und/oder mit der wenigstens einmal im Umschlingungstrieb vorhandenen zweiten Führungsvorrichtung mechanisch verbunden ist. Dadurch können die miteinander verbundenen Vorrichtungen im Umschlingungstrieb gemeinsam ausgerichtet und einfach justiert werden.

Wenn wenigstens eine der genannten Vorrichtungen vorteilhafterweise mit einer die Reibung mit dem Umschlingungsmittels vermindernden Oberfläche versehen ist, kann dies zu einer weiteren Reibungsreduzierung und somit Erhöhung der Lebensdauer des Umschlingungsmittels führen.

Alternativ dazu kann gemäß der Erfindung ein Umschlingungstrieb geschaffen werden, umfassend ein umlaufendes Umschlingungsmittel, welches von wenigstens einem Antriebselement angetrieben wird und welches wenigstens ein Abtriebselement antreibt, sowie wenigstens eine erste auf das Umschlingungsmittel wirkende Spannvorrichtung in einem Bereich des Umschlingungstriebs, in dem das Umschlingungsmittel in seiner Umlaufrichtung das Antriebselement verlässt und das nächstgelegene Abtriebselement erreicht, und wenigstens eine zweite Vorrichtung in einem Bereich des Umschlingungstriebs, in dem das Umschlingungsmittel in seiner Umlaufrichtung das Antriebselement erreicht und das nächstgelegene Abtriebselement verlässt.

Gemäß der Erfindung ist zudem vorgesehen, dass die wenigstens einmal im Unschlingungstrieb vorhandene zweite Vorrichtung ebenfalls zum Spannen des Umschlingungsmittels derart ausgebildet ist, dass diese mit einer solchen Kraft F1 auf das Umschlingungsmittel wirkt, die kleiner ist als eine im Betrieb des Umschlingungsmittels auf die zweite Spannvorrichtung wirkende, entgegen gerichtete Kraft F2. Diese auf die zweite Spannvorrichtung wirkende entgegen gerichtete Kraft F2 wird durch das von der ersten Spannvorrichtung gespannte Umschlingungsmittel aufgebracht.

Durch diesen Aufbau wird erreicht, dass insbesondere in einer nach einer Stillstandphase, in der die erste, druckmittelbetriebene Spannvorrichtung mangels nicht mehr vorhandenem Druckmitteldruck keine das Umschlingungsmittel spannende Kraft auf dasselbe ausübt, eine verschleißbedingte Längung des Umschlingungsmittels dadurch im Umschlingungstrieb kompensiert wird, in dem diese zweite Spannvorrichtung eine diesbezügliche Spannkraft auf das Umschlingungsmittel ausübt.

Dadurch kann ein Zahnspringen sowie damit verbundene Drehwinkelfehler bzw. Synchronlauffehler beispielsweise an einer Kurbelwellenscheibe bzw. an den Nockenwellenscheiben einer Brennkraftmaschine sicher vermieden werden. Zudem werden die Auftretenswahrscheinlichkeit sowie die Amplitude von Transversalschwingungen des Umschlingungsmittels weiter reduziert oder sogar vollständig vermieden.

Zudem kann die zweite Spannvorrichtung in ihrer konstruktiven Auslegung kompakter als die erste, druckmittelbetätigbare Spannvorrichtung ausgebildet sowie dazu geeignet sein, das Umschlingungsmittel in dessen Betrieb entlang seiner optimalen Umschlingungsbahn zu führen. Da die auf das Umschlingungsmittel wirkenden Kraft F1 der zweiten Spannvorrichtung kleiner ist als die im Betrieb des das Umschlingungsmittels auf die zweite Spannvorrichtung wirkende entgegen gerichtete Kraft F2 ist, hat die Kraft F1 der zweiten Spannvorrichtung keine spürbar negative Auswirkung für den Betrieb des Umschlingungsmittels. Sie ist aber bei fehlender Druckmittelzufuhr zu dem Aktuator der ersten Spannvorrichtung in der Lage, das Umschlingungsmittel so stark zu spannen, dass eine Längung des Umschlingungsmittels, beispielsweise bedingt durch Verschleiß oder durch Gegendrehen des Antriebselementes, insbesondere beim Abstellen des Umschlingungstriebs bzw. nach Abstellen des Umschlingungstriebs, kompensiert wird.

Außerdem kann vorgesehen sein, dass die auf das Umschlingungsmittel wirkende Kraft der zweiten Spannvorrichtung zumindest teilweise durch eine Federkraft verursacht wird, welches einen konstruktiv einfachen Aufbau der Vorrichtung bei hoher Zuverlässigkeit ermöglicht. Wenn die Federkraft durch wenigstens eine Spiral-, Blatt- oder Torsionsfeder verursacht wird, kann darüber hinaus Kosten sparend auf gängige Konstruktionselemente zurückgegriffen werden.

Es ist für die Lebensdauer des Umschlingungsmittels durchaus vorteilhaft, wenn die wenigstens einmal im Umschlingungstrieb vorhandene zweite Spannvorrichtung, welche durch eine Federkraft beaufschlagt oder welche selbst federelastisch ausgebildet ist, mit einer die Reibung vermindernden Oberfläche versehen ist. Hierdurch kann die Größe der Feder kleiner und damit Platz sparender gehalten werden bzw. gegebenenfalls vollständig entfallen.

Die wenigstens einmal im Unschlingungstrieb vorhandene zweite Spannvorrichtung kann in vorteilhafter Weiterbildung des Erfindungsgedankens einen in Richtung zum Lostrum des Umschlingungsmittels verschiebbaren Führungsgrundkörper aufweisen, oder einen Führungsgrundkörper haben, der verformbar ausgebildet ist. Durch die Verschiebbarkeit des Führungsgrundkörpers ist eine sehr präzise Verstellung desselben am Umschlingungstrieb möglich. Der Einsatz eines verformbaren Führungsgrundkörper führt zu einer zusätzlichen Kraft und unterstützt die auf das Umschlingungsmittel wirkende Federkraft der zweiten Spannvorrichtung, wodurch eine konstruktiv vorgesehene Feder kleiner gehalten werden kann.

In besonders vorteilhafter Ausgestaltung der Erfindung ist vorgesehen, dass auch die wenigstens einmal im Umschlingungstrieb vorhandene erste Spannvorrichtung mit einer auf das Umschlingungsmittel wirkenden Federkraft beaufschlagbar ist. Hierdurch wird eine gewisse Grundspannung des Umschlingungsmittels zu beiden Seiten des Antriebselementes sichergestellt, und zwar unabhängig von der Betriebssituation eines druckmittelbetätigbaren Spanners der ersten Spannvorrichtung. Längenänderungen des Umschlingungsmittels, zum Beispiel durch Verschleiß oder durch ein Gegendrehen des Antriebselementes, welches z.B. beim Abstellen oder nach dem Abstellen eines Motors auftreten kann, können so vorteilhaft kompensiert werden.

Weiterhin ist es von Vorteil, wenn die wenigstens einmal im Umschlingungstrieb vorhandene erste, druckmittelbetätigbare Spannvorrichtung und die wenigstens einmal vorhandene zweite Spannvorrichtung mittels wenigstens einer Feder elastisch miteinander verbunden sind. Dabei verursacht diese Feder eine solche auf das Umschlingungsmittel sowohl am Zugtrum als auch am Lostrum wirkende Kraft, dass bei Stillstand der Antriebsmaschine bzw. bei Wegfall einer Druckversorgung für den druckmittelbetätigbaren Spanner der ersten Spannvorrichtung eine zu große Lose im Umschlingungstrieb beseitigt wird.

Gleichermaßen bietet es aber auch Vorteile, wenn die im Umschlingungstrieb wenigstes einmal vorhandene erste, druckmittelbetätigbare Spannvorrichtung und die wenigstens einmal im Umschlingungstrieb vorhandene zweite Spannvorrichtung mittels eines Gelenkmechanismus miteinander verbunden sind, wobei der Gelenkmechanismus mit wenigstens einer Feder verbunden ist, welche eine auf das Umschlingungsmittel ständig wirkende Kraft verursacht.

In einer bevorzugten Ausführungsform ist vorgesehen, dass die Führungsgrundkörper der beiden Spannvorrichtungen in jeweils gesonderten Anbindungspunkten schwenkbar gelagert sind, dass diese Führungsgrundkörper in anderen Anbindungspunkten jeweils mit einem hebelartigen Verbindungselement gelenkig verbunden sind, dass diese Verbindungselemente in einem Verbindungspunkt miteinander verschwenkbar verbunden sind, und dass an diesem Verbindungspunkt eine Feder derart angreift, dass über die Verbindungselemente und die genannten Führungsgrundkörper eine Grundanpresskraft auf das Umschlingungsmittel wirkt.

Zudem wird es als vorteilhaft beurteilt, wenn die Verbindungselemente und die Feder dieses Umschlingungstriebs radial innerhalb desselben angeordnet sind.

Durch die obigen Konstruktionsmerkmale kann eine gleichgroße oder durch unterschiedliche Hebelarmlängen der Verbindungselemente eine unterschiedliche Verteilung der auf den Riemen 8 wirkenden Grundanpresskraft F1 erzielt werden.

### Kurze Beschreibung der Zeichnungen

Die Erfindung wird im Folgenden anhand der beiliegenden Zeichnung an einigen Ausführungsformen näher erläutert. Darin zeigen
- Fig. 1: eine Prinzipdarstellung eines Umschlingungstriebs gemäß einer ersten erfindungsgemäßen Lösung und
- Fig. 2 bis 9: unterschiedliche schematische Darstellungen für Ausführungsformen eines Umschlingungstriebs gemäß einer zweiten erfindungsgemäßen Lösung.

### Detaillierte Beschreibung der Zeichnungen

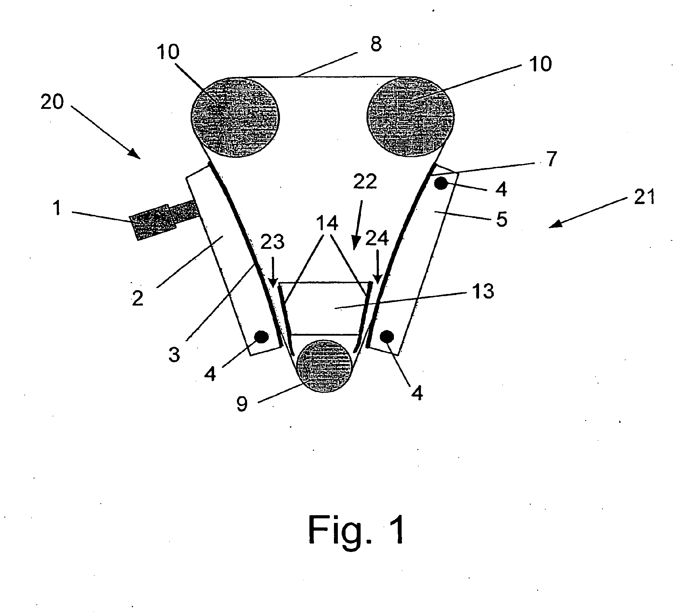

Der in Fig. 1 schematisch dargestellte Riementrieb ist an einem Kraftfahrzeug-Motor einsetzbar und weist unten eine mit einer nicht gezeigten Kurbelwelle verbundene Riemenscheibe 9 auf, die einen umlaufenden Riemen 8 im Uhrzeigersinn antreibt. Der Riemen 8 treibt wiederum zwei oben liegende Riemenscheiben 10 an, welche mit nicht gezeigten Nockenwellen verbunden sind.

Der Bereich des Riementriebs, in dem der Riemen 8 in seiner Umlaufrichtung die antreibende Riemenscheibe 9 verlässt und die nächstgelegene Riemenscheibe 10 erreicht, wird allgemein als Lostrum bezeichnet. Der Bereich des Riementriebs, in dem der Riemen 8 in seiner Umlaufrichtung die antreibende Riemenscheibe 9 erreicht und die nächstgelegene Riemenscheibe 10 verlässt, wird allgemein als Zugtrum bezeichnet.

Wie Fig. 1 zeigt, ist im Lostrum eine erste Spannvorrichtung 20 vorgesehen, welche aus einem druckmittelbetätigbaren Spanner 1 in Form einer Kolben-Zylinder-Anordnung, einem an einem Anbindungspunkt 4 schwenkbar angelenkten Führungsgrundkörper 2 und einem auf dem Führungsgrundkörper 2 riemenseitig aufgebrachten reibungsmindernden Gleitbelag 3 besteht. Der Spanner 1 beaufschlagt den Führungsgrundkörper 2 der ersten Spannvorrichtung 20 mit einer Kraft, die den über den Gleitbelag 3 laufenden Riemen 8 in dieser Darstellung nach rechts radial in etwa in Richtung des Zentrum des Riementriebs drückt und somit spannt.

Im Zugtrum ist eine zusätzliche Vorrichtung 21 zum Führen des als Riemens 8 ausgeführten Zugmittels vorgesehen, die einen an zwei Anbindungspunkten 4 befestigten Führungsgrundkörper 5 aufweist, auf dem riemenseitig ein reibungsmindernder Gleitbelag 7 aufgebracht ist. Weiterhin ist unten im unmittelbaren Bereich der Riemenscheibe 9, und zwar radial innerhalb des Riementriebs und oberhalb der Riemenscheibe 9, eine Führungsvorrichtung 22 vorgesehen, die zur Führung des Riemens 8 geeignet ist.

Diese Führungsvorrichtung 22 weist einen Führungsgrundkörper 13 auf, welcher zwei Führungsschienen trägt, die jeweils wiederum mit einem Gleitbelag 14 versehen sind. Von den beiden Führungsschienen ist die eine Führungsschiene der im Lostrum befindlichen Innenseite und die andere Führungsschiene der im Zugtrum befindlichen Innenseite des Riemens 8 zugewandt.

Die Führungsschienen sind mit ihrem Gleitbelag 14 in geringem Abstand vom Riemen 8 derart angeordnet, dass zwischen dem Gleitbelag 7 des Führungsgrundkörpers 5 der zusätzlichen Vorrichtung 21 und dem Gleitbelag 14 des Führungsgrundkörpers 13 bzw. zwischen dem Gleitbelag 3 des Führungsgrundkörpers 2 der ersten Spannvorrichtung 20 und dem Gleitbelag 14 des Führungsgrundkörpers 13 jeweils ein in etwa trichterförmiger Führungskanal 23, 24 für den Riemen 8 gebildet ist.

Der Führungskanal 23 verhindert auf der Leertrummseite beispielsweise, dass sich ein verschleißbedingt verlängerter Riemen 8 bei einer Entspannung des Riemens 8 aufgrund einer nachlassenden Kraftbeaufschlagung durch die erste Spannvorrichtung 20 so weit von der Riemenscheibe 9 abheben kann, dass ein Zahnspringen verursacht wird. Die gleiche Wirkung erzeugt der andere Führungskanal 24 an der Zugtrumseite der antreibenden Riemenscheibe 9, wo ein durch Aufstauen des Riemens 8 und ein dadurch verursachtes Zahnspringen vermieden wird. Zudem wird dadurch vorteilhaft das Entstehen von Transversalschwingungen des Riemens 8 verhindert oder doch zumindest vorteilhaft reduziert.

Die Führungsschienen der Führungsvorrichtung 22 können mit ihren Gleitbelägen 14 aber auch derart angeordnet sein, dass sie sich in ständigem Kontakt mit dem Riemen 8 befinden. Es ist auch möglich, dass die zusätzliche, radial innerhalb des Riementriebs befindliche Führungsvorrichtung 22 an anderer Stelle innerhalb radial innerhalb des Riementriebs angeordnet ist, oder weitere Führungsvorrichtungen radial innerhalb des Riementriebs vorgesehen sind.

Es ist auch möglich, dass nur eine Führungsvorrichtung 22 bzw. mehrere Führungsvorrichtungen mit jeweils nur einer dem Riemen 8 zugeordneten führenden Oberfläche radial innerhalb des Riementriebs angeordnet sind.

Der Führungsgrundkörper 13 der Führungsvorrichtung 22 kann in einer weiteren Variante mit einem der beiden anderen Führungsgrundkörper 2 bzw. 5 oder auch mit beiden Führungsgrundkörpern 2 und 5 in geeigneter Weise mechanisch verbunden sein.

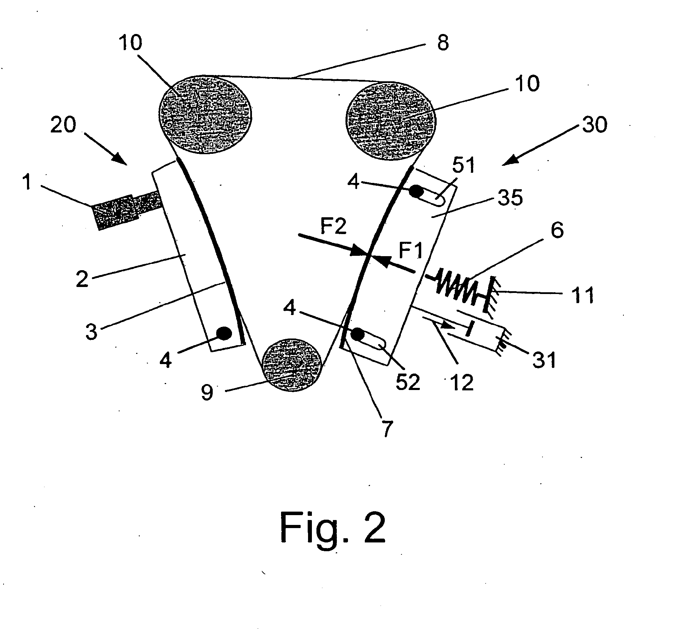

Fig. 2 zeigt ebenfalls einen Umschlingungstrieb einer Brennkraftmaschine mit einem umlaufenden, als Riemen 8 ausgeführten Zugnittel, das ein Abtriebsrad und zumindest ein Antriebsrad verbindet. In dem vorliegenden Fall erfolgt der Antrieb von der Riemenscheibe 9 über den Riemen 8 auf die zwei Riemenscheiben 10. Im Lostrum ist wiederum eine aus einem druckmittelbetätigbaren Spanner 1 und einem Führungsgrundkörper 2 mit Gleitbelag 3 bestehende erste Spannvorrichtung 20 angeordnet.

Am Zugtrum ist eine zweite Spannvorrichtung 30 mit einem einen Gleitbelag 7 aufweisenden Führungsgrundkörper 35 angeordnet. Der Führungsgrundkörper 35 wird von einer Feder 6 mit einer Kraft beaufschlagt, wobei die Federanbindung 11 an einem feststehendem Teil zum Beispiel am Gehäuse der Brennkraftmaschine vorgenommen sein kann. Zudem ist eine Kolben-Zylinder-Anordnung 31 derart mit dem Führungsgrundkörper 35 und dem Gehäuse des der Brennkraftmaschine verbunden, dass der Führungsgrundkörper 35 dieser zweiten Spannvorrichtung 30 gegen die Anpresskraft der Feder 6 vom Riemen 8 weg bewegt werden kann.

Um die Verschiebbarkeit des Führungsgrundkörpers 35 dieser zweiten Spannvorrichtung 30 zu ermöglichen, weist dieser zudem zwei längliche, in Richtung zu dem Zugtrum des Riemens 8 ausgerichtete Ausnehmungen 51 und 52 auf, die von zwei als Stehbolzen ausgebildeten Anbindungspunkten 4 durchsetzt sind, so dass der Führungsgrundkörper 35 in Richtung zu den Riemen 8 verschiebbar angeordnet ist.

Im Betrieb der Brennkraftmaschine wird ein ausreichend großer Druckmitteldruck erzeugt, der an den Spanner 1 der ersten Spannvorrichtung 20 und an die Kolben-Zylinder-Anordnung 31 der zweiten Spannvorrichtung 30 geleitet wird. Dadurch drückt die erste Spannvorrichtung 20 gegen den Riemen 8 um diesen zu spannen, während die Kolben-Zylinder-Anordnung 31 der zweiten Spannvorrichtung 30 derartig mit Öldruck 12 beaufschlagt wird, dass der Führungsgrundkörper 35 gegen die Kraft der Feder 6 reibungsmindernd von dem Riemen 8 abhebt oder zumindest mit geringer Kraft den Riemen 8 führend auf diesem aufliegt.

Sofern die Brennkraftmaschine abgeschaltet ist und somit kein unter Druck stehendes Druckmittel für den Spanner 1 bzw. für die Kolben-Zylinder-Anordnung 31 zur Verfügung steht, kann der Spanner 1 der ersten Spannvorrichtung 20 den Riemen 8 auch nicht spannen. Wenn nun der Riemen 8 verschleißbedingt länger als sein Einbaumaß ist, führt dies ohne weitere Maßnahmen zu einem insgesamt nur vergleichsweise locker in dem Riementrieb eingehängten Riemen 8. Wenn nun die Brennkraftmaschine erneut gestartet wird, könnte ein unerwünschtes Zahnspringen an der Antriebsscheibe 9 und/oder an den Abtriebsscheiben 10 auftreten, welches zu Phasen- bzw. Drehwinkelfehler der Wellen in diesem Umschlingungstrieb führen würde.

Da die Kolben-Zylinder-Anordnung 31 der zweiten Spannvorrichtung 30 bei abgeschaltetem Antriebsmotor bzw. bei nicht oder nicht ausreichend vorhandenem Druckmitteldruck für dieselbe keine die Kraft der Feder 6 überwindende Gegenkraft erzeugt, drückt die Feder 6 eben mit dieser Federkraft F1 den Führungsgrundkörper 35 gegen den Riemen 8, so dass derselbe auch in dieser Betriebssituation gespannt und ein Zahnspringen sicher vermieden wird.

Bei eingeschaltetem Antriebsmotor hingegen, also im Betrieb des Riemens 8, wird ein ausreichender Öldruck 12 für den druckmittelbetätigbaren Spanner 1 erzeugt, welcher entgegen der Federkraft F1 der Feder 6 mit einer Kraft F2 auf den Riemen 8 bzw. die im Lostrum angeordnete zweiten Spannvorrichtung 30 wirkt, die größer ist als die Federkraft F1. Dadurch wird der Führungsgrundkörper 35 nach außen gedrückt, bis sich, wie in Fig.2 dargestellt, die als Stehbolzen ausgebildeten Anbindungspunkte 4 am linken Anschlag der Ausnehmungen 51, 52 im Führungsgrundkörper 35 der zweiten Spannvorrichtung 30 befinden.

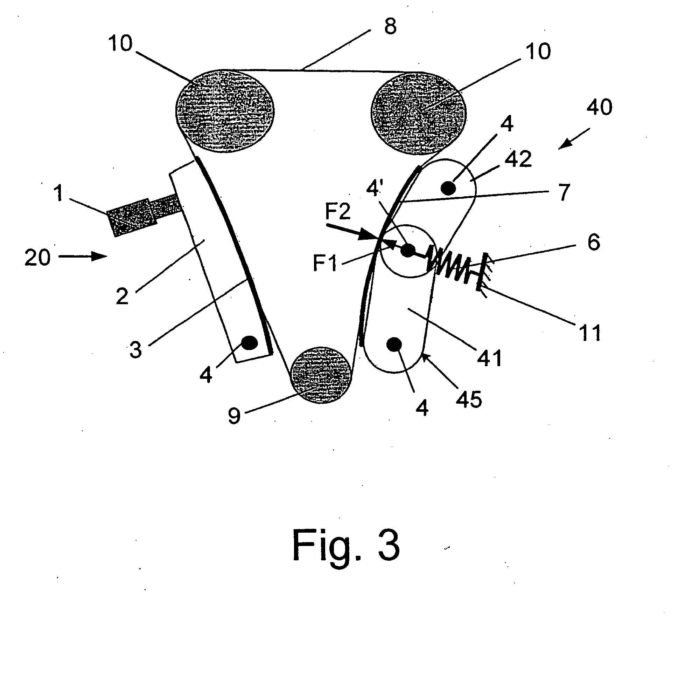

Im Unterschied zur Fig. 2 zeigt die Fig. 3 einen Riementrieb, bei dem der Führungsgrundkörper 45 einer im Lostrum vorgesehenen zweiten Spannvorrichtung 40 verformbar ausgebildet ist. Dazu ist in diesem Ausführungsbeispiel der Führungsgrundkörper 45 zweiteilig ausgebildet, wobei dieser an den Enden seiner Längserstreckung an Anbindungspunkten 4 schwenkbar fixiert ist. Die beiden Einzelteile 41 und 42 des mehrteiligen Führungsgrundkörpers 45 sind in einem mittleren Bereich desselben in einem Anbindungspunkt 4' schwenkbar miteinander verbunden. An diesem Anbindungspunkt 4' greift auch eine Feder 6 an, die mit ihrem anderen Ende beispielsweise am Motorgehäuse ortsfest gelagert ist. Auch bei dieser Variante ist die durch die Feder 6 erzeugte und in Richtung zum Riemen 8 wirkende Federkraft F1 kleiner als die bei eingeschaltetem Antriebsmotor von der ersten Spannvorrichtung 20 erzeugte und über den Riemen 8 auf den Führungsgrundkörper 45 wirkende Kraft F2.

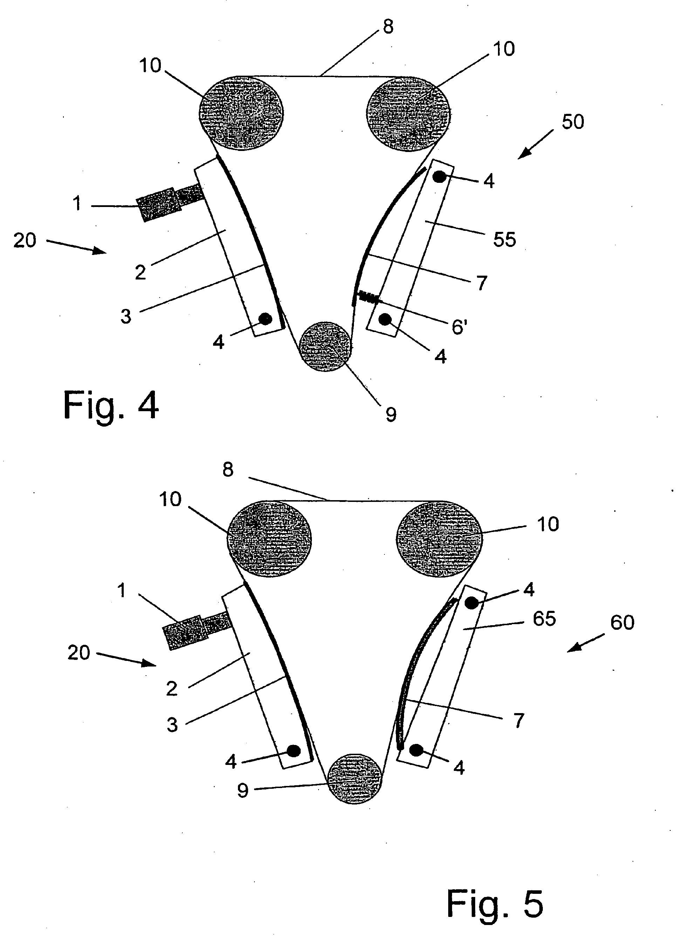

Der in Fig. 4 dargestellte Umschlingungstrieb weist im Unterschied zur Variante gemäß Fig. 2 im Zugtrum eine zweite Spannvorrichtung 50 auf, bei welcher der einteilig ausgebildete Führungsgrundkörper, 55 an zwei endseitigen Anbindungspunkten 4 fixiert ist, und bei der zwischen dem Gleitbelag 7 und dem Führungsgrundkörper 55 eine Feder 6' angeordnet ist. Unter dem Begriff Gleitbelag wird in diesem Zusammenhang keine Beschichtung eines Körpers sondern derjenige Körper selbst verstanden, welcher federbelastet mit dem Riemen 8 in Kontakt ist.

Dieser so genannte Gleitbelag 7 kann (wie in Fig.5 dargestellt) aber auch selbst federelastisch, beispielsweise blattfederförmig ausgebildet sein, welcher sich gemäß der dort dargestellten zweiten Spannvorrichtung 60 endseitig an einem Führungsgrundkörper 65 abstützt. Dieser Führungsgrundkörper 65 ist hier ebenfalls an zwei Anbindungspunkten 4 gehäusefest gehalten. Auch bei den in Fig. 4 bzw. Fig. 5 gezeigten Umschlingungstrieben ist die durch die Feder 6' bzw. den federelastischen Gleitbelag 7 selbst erzeugte Federkraft F1 in Reichtung zum Riemen 8 kleiner als die bei angestellter Brennkraftmaschine von dem druckmittelbetätigbaren Spanner 1 der ersten Spannvorrichtung 20 erzeugte und über den Riemen 8 auf die Führungsgrundkörper 55 bzw. 65 gelenkte Kraft F2.

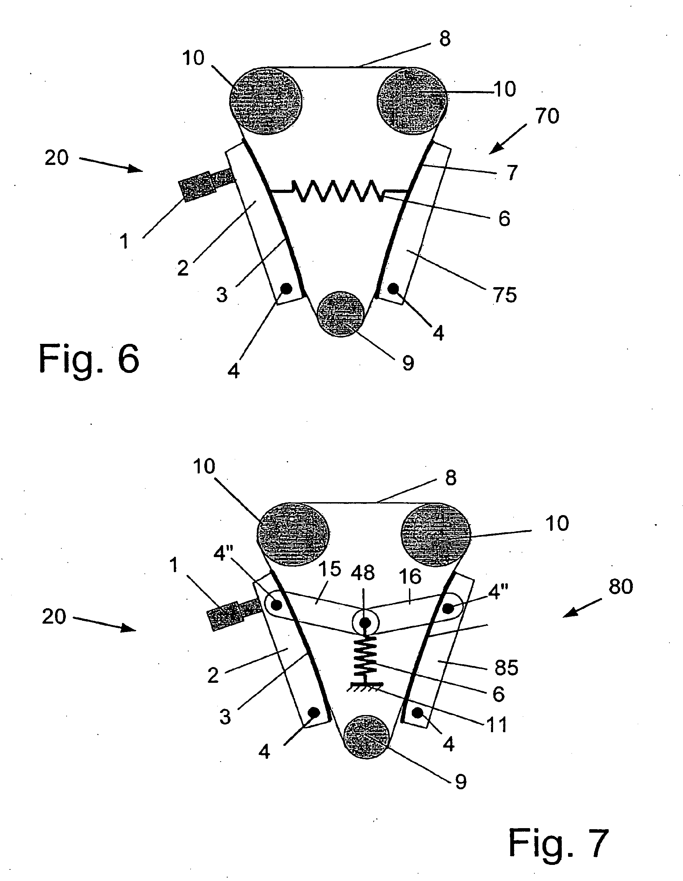

Fig. 6 zeigt. im Unterschied zur Variante gemäß Fig. 2 einen Umschlingungstrieb mit einer zweiten Spannvorrichtung 70, bei dem ein Führungsgrundkörper 75 dieser der am Zugtrum vorgesehenen zweiten Spannvorrichtung 70 lediglich im unteren, zu dem Antriebselement 9 weisenden Bereich durch einen Anbindungspunkt 4 schwenkbar angelenkt ist. Zudem sind die im Lostrum sowie Zugtrum angeordneten beiden Spannvorrichtungen 20 bzw. 70 über eine Feder 6 elastisch miteinander verbunden. Dadurch wird erreicht, dass der Riemen 8 unabhängig von der Druckversorgung für den druckmittelbetätigbaren Spanner 1 sowohl im Lostrum als auch im Zugtrum mit einer Grundspannung beaufschlagt wird, die eine zu große Riemenlose beseitigt.

Bei einer im Betrieb befindlichen Brennkraftmaschine wird ausreichend unter Arbeitsdruck stehendes Druckmittel für den Spanner 1 erzeugt, so dass dieser eine verschleißbedingt vorhandene Riemenlose kompensierend den Riemen 8 spannt. Die Feder 6 zwischen der ersten Spannvorrichtung 20 und der zweiten Spannvorrichtung 70 erzeugt auch in dieser Betriebsphase eine Anpresskraft, mit der der Führungsgrundkörper 75 gegen den Riemen 8 gedrückt wird.

Sofern die Druckversorgung für den druckmittelbetätigbaren Spanner 1 unterbrochen ist, führt dies zwar zu einer Rückstellbewegung des Führungsgrundkörpers 2 der ersten Spannvorrichtung 20 weg vom Riemen 8, da die Feder 6 jedoch mit ihren an diesem Führungsgrundkörper 2 befestigten Ende bei dieser Rückstellbewegung mitgezogen wird, bleibt die Kraft zumindest des Führungsgrundkörpers 75 der zweiten Spannvorrichtung 70 auf den Riemen 8 wenigstens gleich groß. Eine ungewollt große Riemenlose sowie ein Zahnspringen im Umschlingungstrieb werden dadurch sicher verhindert.

In Fig. 7 ist in Abänderung zur Variante gemäß Fig. 6 ein Umschlingungstrieb dargestellt, bei dem an den am Lostrum bzw. am Zugtrum angeordneten Führungsgrundkörpern 2 und 85 der beiden Spannvorrichtungen 20 und 80 in deren vom Antriebselement 9 wegweisenden Bereich an jeweils einem Anbindungspunkt 4" je ein hebelartiges Verbindungselement 15 bzw. 16 angelenkt ist. Diese Verbindungselemente 15 bzw. 16 sind mit ihrem anderen Ende in einem Verbindungspunkt 48 gelenkig miteinander verbunden. An diesem Verbindungspunkt 48 greift wiederum eine Feder 6 an, deren Federkraft mittels der hebelartigen Verbindungselemente 15 bzw. 16 zu etwa gleichen Teilen auf die Führungsgrundkörper 2 bzw. 5 wirkt. Dies geschieht derart, dass der Riemen 8 unabhängig vom druckmittelbetätigbaren Spanner 1 sowohl im Lostrum als auch im Zugtrum mit einer Grundspannkraft beaufschlagt wird, die einen losen Riemen 8 bei nicht vorhandener Druckmittelversorgung für den Spanner 1 spannt. Im Betriebsverhalten, also bei ein- oder ausgeschalteter Druckversorgung für den Spanner 1, arbeiten diese beiden Spannvorrichtungen 20 und 80 gemäß Fig. 7 wie die beiden Spannvorrichtungen 20 und 70 gemäß Fig. 6.

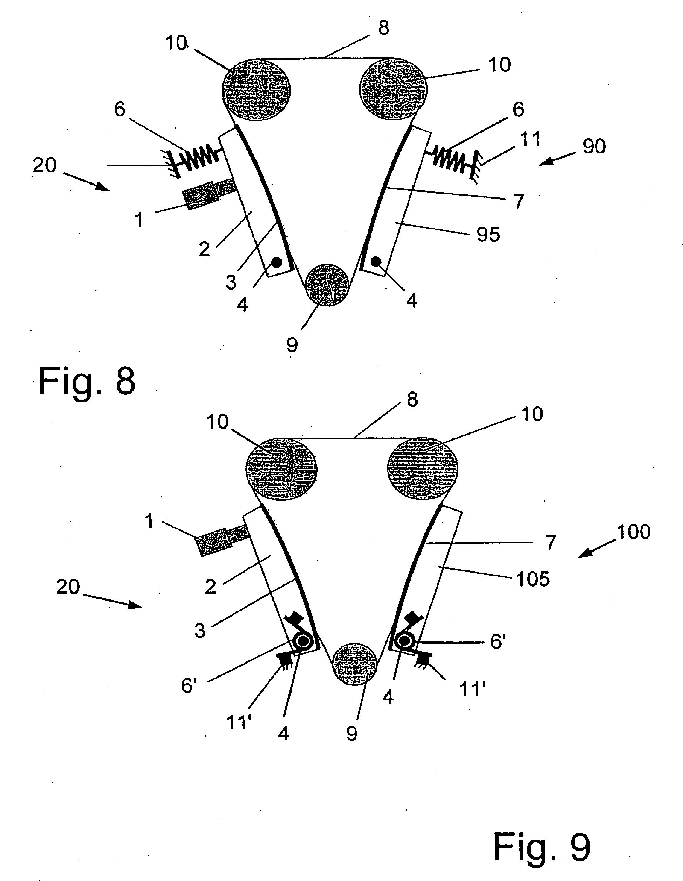

Im Unterschied zur Variante gemäß Fig. 6 sind bei dem in Fig. 8 gezeigten Umschlingungstrieb die Führungsgrundkörper 2 bzw. 95 der beiden Spannvorrichtungen 20 und 90 jeweils durch eine Feder 6 mit einer Federkraft beaufschlagt. Auch dadurch wird erreicht, dass der Riemen 8 unabhängig vom einer Betätigungskraft des druckmittelbetätigbaren Spanners 1 sowohl im Lostrum als auch im Zugtrum mit einer federerzeugten Grundspannkraft beaufschlagt wird. Dabei drücken bei abgestellter Druckmittelversorgung für den Spanner 1 die Führungsgrundkörper 2 und 95 mittels jeweils einer zugeordneten Feder 6 auf den Riemen 8, so dass eine unerwünscht große Riemenlose kompensierend ein Zahnspringen des Umschlingungsmittels 8 vermieden wird.

Abweichend von dem Ausführungsbeispiel gemäß Fig. 6 sind bei dem in Fig. 9 gezeigten Umschlingungstrieb die einseitig in den Anbindungspunkten 4 schwenkbar gelagerten Führungsgrundkörper 2 und 105 der beiden Spannvorrichtungen 20 und 100 jeweils an ihrem unteren, antriebsscheibennahen Ende durch als Schenkelfedern ausgebildete Torsionsfedern 6' mit einer Federkraft beaufschlagt. Die Torsionsfedern 6' stützen sich dabei gegen ortsfeste Federanbindungspunkte 11' ab. Auch hierdurch wird erreicht, dass der Riemen 8 unabhängig vom druckmittelbetätigbaren Spanner 1 sowohl im Lostrum als auch im Zugtrum mit einer Grundspannkraft beaufschlagt wird. Eine verschleißbedingte Riemenlängung wird auf diese Weise kompensiert sowie letztlich Drehwinkelfehler zwischen den im Umschlingungstriebe drehenden Wellen vermieden.

Wie die Varianten gemäß den Figuren 6 bis 9 verdeutlichen, wirkt auch bei diesen im Betrieb des Umschlingungsmittels bzw. bei Druckbeaufschlagung des druckmittelbetätigbaren Spanners 1 über die jeweils zweite Spannvorrichtung 30, 40, 50, 60, 70, 80, 90, 100 eine Kraft F1 auf das Umschlingungsmittel 8, die kleiner ist als diejenige Kraft F2, die das Umschlingungsmittel 8 selbst im Betrieb auf diese zweiten Spannvorrichtungen 30, 40, 50, 60, 70, 80, 90, 100 ausübt.

Die jeweils zweiten Spannvorrichtungen 40, 50, 60,70, 80, 90 und 100 gemäß den Figuren 3 bis 9 können ebenfalls mit einer Kolben-Zylinder-Anordnung 31 gemäß Fig. 2 ausgestattet sein, die eine solche zweite Spannvorrichtung reibungsmindernd von dem Riemen 8 wegdrückt, wenn beim Betrieb der Antriebsmaschine ein ausreichend hoher Druckmitteldruck für den druckmittelbetätigbaren Spanner 1 der ersten Spannvorrichtung 20 vorhanden ist, so dass dieser sicher ein ungespannt zu lose im Umschlingungstrieb angeordnetes Umschlingungsmittel 8 spannen kann (nicht dargestellt).

### Bezugszeichenliste

- 1: druckmittelbetätigbarer Spanner
- 2: Führungsgrundkörper Lostrum
- 3: Gleitbelag Führung Lostrum
- 4: Anbindungspunkt
- 4': Anbindungspunkt, Gelenkpunkt
- 4": Anbindungspunkt
- 5: Führungsgrundkörper am Führungsgrundkörper
- 6: Feder
- 6': Torsionsfeder
- 7: Gleitbelag bzw. Oberfläche des Führungsgrundkörpers
- 8: Riemen, Umschlingungsmittel
- 9: Antriebselement, Riemenscheibe an der Kurbelwelle
- 10: Antriebselement, Riemenscheibe an der Nockenwelle
- 11: Federanbindung
- 11': Federanbindung
- 12: Öldruck
- 13: Führungsgrundkörper innere Führungsvorrichtung
- 14: Gleitbelag Führung innere Führungsvorrichtung
- 15: Verbindungselement
- 16: Verbindungselement
- 20: Erste Spannvorrichtung
- 21: Zweite Vorrichtung, Zweite Spannvorrichtung
- 22: Führungsvorrichtung
- 23: Führungskanal
- 24: Führungskanal
- 30: zweite Spannvorrichtung
- 31: Kolben-Zylinder-Anordnung
- 35: Führungsgrundkörper
- 40: zweite Spannvorrichtung
- 41: Einzelteil des Führungsgrundkörper 40
- 42: Einzelteil des Führungsgrundkörper 40
- 45: Führungsgrundkörper
- 48: Verbindungspunkt
- 50: zweite Spannvorrichtung
- 51: Ausnehmung Führungsgrundkörper
- 52: Ausnehmung Führungsgrundkörper
- 55: Führungsgrundkörper
- 60: zweite Spannvorrichtung
- 65: Führungsgrundkörper
- 70: zweite Spannvorrichtung
- 75: Führungsgrundkörper
- 80: zweite Spannvorrichtung
- 85: Führungsgrundkörper
- 90: zweite Spannvorrichtung
- 95: Führungsgrundkörper
- 100: zweite Spannvorrichtung
- 105: Führungsgrundkörper
- F1: Kraft der zweiten Spannvorrichtung auf das Umschlingungsmittel
- F2: Kraft des Umschlingungsmittels während dessen Betriebs auf die zweite Spannvorrichtung

## Patentansprüche

1. Umschlingungstrieb mit einem umlaufenden Umschlingungsmittel (8), welches von wenigstens einem Antriebselement (9) angetrieben wird und wenigstens ein Abtriebselement (10) antreibt, sowie mit mehreren Spann- und/oder Führungsvorrichtungen, die auf das Umschlingungsmittel (8) einwirken, wobei eine erste Spannvorrichtung (20), die auf die Außenseite des Umschlingungsmittels (8) wirkt, in einem Bereich des Umschlingungstriebs angeordnet ist, in dem das Umschlingungsmittel (8) in seiner Umlaufsrichtung das Antriebselement (9) verlässt und das nächstgelegene Abtriebselement (10) erreicht, und wobei eine zweite Vorrichtung (21), die zum Führen des Umschlingungsmittels (8) ausgebildet ist und auf die Außenseite des Umschlingungsmittels (8) wirkt, in einem Bereich des Umschlingungstriebs angeordnet ist, in dem das Umschlingungsmittel (8) in seiner Umlaufrichtung das Antriebselement (9) erreicht und das nächstgelegene Abtriebselement (10) verlässt, und wobei eine dritte Vorrichtung (22) vorgesehen ist, die ebenfalls zum Führen des Umschlin-gungsmittels (8) ausgebildet ist,**dadurch gekenntzeichnet,dass** diese dritte Vorrichtung (22) in demjentgen Bereich des Antriebselementes (9) angeordnet ist, in dem das Umschlingungsmittel (8) in seiner Umlaufrichtung das Antriebselement (9) erreicht, wobei die dritte Vorrichtung (22) in diesem Bereich auf die Innenseite des Umschlingungsmittels (8) wirkt.

2. Umschlingungstrieb nach Anspruch 1, **dadurch gekennzeichnet, dass** die dritte Vorrichtung (22) in einem definierten Abstand von der Innenseite des Umschlingungsmittels (8) angeordnet ist.

3. Umschlingungstrieb nach Anspruch 1 oder 2, **dadurch gekennzeichnet, dass** die dritte Vorrichtung (22) dazu geeignet ist, sowohl in demjenigen Bereich des Antriebselementes (9) zu wirken, in dem das Umschlingungsmittel (8) in seiner Umlaufrichtung das Antriebselement (9) erreicht, als auch in demjenigen Bereich des Antriebselementes (9), in dem das Umschlingungsmittel (8) in seiner Umlaufrichtung das Antriebselement (9) verlässt.

4. Umschlingungstrieb nach Anspruch 3, **dadurch gekennzeichnet, dass** die dritte Vorrichtung (22) einen Führungsgrundkörper (13) mit zwei radial gegenüber liegenden, Gleitbeläge (14) tragende Führungsschienen aufweist, und dass diese Gleitbeläge (14) als Anlageflächen für die radial gegenüber liegenden Innenseiten des Umschlingungsmittels (8) dienen.

5. Umschlingungstrieb nach Anspruch 4, **dadurch gekennzeichnet, dass** die Führungsschienen bzw. deren Gleitbeläge (14) der dritten Vorrichtung (22) derartig angeordnet sind, dass zwischen den Gleitbelägen (14) und der innenseite des Umschlingungsmittels (8) trichterförmige Führungskanäle (23, 24) gebildet sind.

6. Umschlingungstrieb nach einem Ansprüche 1 bis 5, **dadurch gekennzeichnet, dass** die dritte Vorrichtung (22) mit der wenigstens einen ersten Vorrichtung (20) und/oder mit der wenigstens einen zweiten Vorrichtung (21) mechanisch verbunden ist.

## Claims

1. Wraparound drive having an endless wraparound means (8) that is driven by at least one drive input element (9) and drives at least one drive output element (10), and also having a plurality of tensioning and/or guide devices that act on the wraparound means, with a first tensioning device (20), which acts on the outer side of the wraparound means (8), being arranged in a region of the wraparound drive in which the wraparound means (8), in its direction of circulation, leaves the drive input element (9) and arrives at the closest drive output element (10), and with a second device (21), which is designed for guiding the wraparound means (8) and which acts on the outer side of the wraparound means (8), being arranged in a region of the wraparound drive in which the wraparound means (8), in its direction of circulation, arrives at the drive input element (9) and leaves the closest drive output element (10), and with a third device (22) being provided that is likewise designed for guiding the wraparound means (8), **characterized in that** said third device (22) is arranged **in that** region of the drive input element (9) in which the wraparound means (8), in its direction of circulation, arrives at the drive input element (9), with the third device (22) acting on the inner side of the wraparound means (8) in said region.

2. Wraparound drive according to Claim 1,
**characterized in that** the third device (22) is arranged with a defined spacing from the inner side of the wraparound means (8).

3. Wraparound drive according to Claim 1 or 2,
**characterized in that** the third device (22) is suitable for acting both **in that** region of the drive input element (9) in which the wraparound means (8), in its direction of circulation, arrives at the drive input element (9), and also in that region of the drive input element (9) in which the wraparound means (8), in its direction of circulation, leaves the drive input element (9).

4. Wraparound drive according to Claim 3, **characterized in that** the third device (22) has a guide basic body (13) with two radially oppositely situated guide rails that support sliding linings (14), and **in that** said sliding linings (14) serve as contact surfaces for the radially oppositely situated inner sides of the wraparound means (8).

5. Wraparound drive according to Claim 4,
**characterized in that** the guide rails, or the sliding linings (14) thereof, of the third device (22) are arranged in such a way that funnel-shaped guide channels (23, 24) are formed between the sliding linings (14) and the inner side of the wraparound means (8).

6. Wraparound drive according to one of Claims 1 to 5, **characterized in that** the third device (22) is mechanically connected to the at least one first device (20) and/or to the at least one second device (21).

## Revendications

1. Mécanisme d'entraînement à courroie comprenant un moyen d'entraînement à courroie en rotation (8), qui est entraîné par au moins un élément d'entraînement (9) et qui entraîne au moins un élément de sortie (10), ainsi que plusieurs dispositifs de tensionnement et/ou de guidage qui agissent sur le moyen d'entraînement à courroie (8), un premier dispositif de tensionnement (20) qui agit sur le côté extérieur du moyen d'entraînement à courroie (8) étant disposé dans une région du mécanisme d'entraînement à courroie dans laquelle le moyen d'entraînement à courroie (8), dans sa direction périphérique, quitte l'élément d'entraînement (9) et atteint l'élément de sortie (10) situé après lui, et un deuxième dispositif (21), qui est réalisé pour guider le moyen d'entraînement à courroie (8) et qui agit sur le côté extérieur du moyen d'entraînement à courroie (8), étant disposé dans une région du mécanisme d'entraînement à courroie dans laquelle le moyen d'entraînement à courroie (8), dans sa direction périphérique, atteint l'élément d'entraînement (9) et quitte l'élément de sortie (10) situé après lui, et un troisième dispositif (22) étant prévu, lequel est réalisé également pour guider le moyen d'entraînement à courroie (8), **caractérisé en ce que** ce troisième dispositif (22) est disposé dans la région de l'élément d'entraînement (9) dans laquelle le moyen d'entraînement à courroie (8) atteint dans sa direction périphérique l'élément d'entraînement (9), le troisième dispositif (22) agissant dans cette région sur le côté interne du moyen d'entraînement à courroie (8).

2. Mécanisme d'entraînement à courroie selon la revendication 1, **caractérisé en ce que** le troisième dispositif (22) est disposé à une distance définie du côté interne du moyen d'entraînement à courroie (8).

3. Mécanisme d'entraînement à courroie selon la revendication 1 ou 2, **caractérisé en ce que** le troisième dispositif (22) est adapté pour agir à la fois dans la région de l'élément d'entraînement (9) dans laquelle le moyen d'entraînement à courroie (8) atteint dans sa direction périphérique l'élément d'entraînement (9), et dans la région de l'élément d'entraînement (9) dans laquelle le moyen d'entraînement à courroie (8) quitte dans sa direction périphérique l'élément d'entraînement (9).

4. Mécanisme d'entraînement à courroie selon la revendication 3, **caractérisé en ce que** le troisième dispositif (22) présente un corps de base de guidage (13) avec deux rails de guidage portant des garnitures de glissement (14) et situés radialement en face l'un de l'autre, et **en ce que** ces garnitures de glissement (14) servent de surfaces d'appui pour les côtés internes, situés radialement en face l'un de l'autre, du moyen d'entraînement à courroie (8).

5. Mécanisme d'entraînement à courroie selon la revendication 4, **caractérisé en ce que** les rails de guidage ou leurs garnitures de glissement (14) du troisième dispositif (22) sont disposés de telle sorte qu'entre les garnitures de glissement (14) et le côté interne du moyen d'entraînement à courroie (8), sont formés des canaux de guidage (23, 24) en forme d'entonnoir.

6. Mécanisme d'entraînement à courroie selon l'une quelconque des revendications 1 à 5, **caractérisé en ce que** le troisième dispositif (22) est connecté mécaniquement à l'au moins un premier dispositif (20) et/ou à l'au moins un deuxième dispositif (21).
